(19) Europäisches Patentamt
European Patent Office
Office européen des brevets

(11) **EP 3 016 066 A1**

(12) **EUROPEAN PATENT APPLICATION**

(43) Date of publication:
**04.05.2016 Bulletin 2016/18**

(51) Int Cl.:
**G06T 3/40** (2006.01)     **G06T 5/00** (2006.01)
**G06T 5/50** (2006.01)

(21) Application number: **14306741.1**

(22) Date of filing: **30.10.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Boitard, Ronan**
  **35576 CESSON SEVIGNE (FR)**
• **Thoreau, Dominique**
  **35576 CESSON SEVIGNE (FR)**

• **Bouatouch, Kadi**
  **35042 RENNES (FR)**
• **Cozot, Remi**
  **35042 RENNES (FR)**
• **Gruson, Adrien**
  **35042 RENNES (FR)**
• **Touze, David**
  **35576 CESSON SEVIGNE (FR)**

(74) Representative: **Huchet, Anne**
**Technicolor**
**1, rue Jeanne d'Arc**
**92443 Issy-les-Moulineaux Cedex (FR)**

(54) **Method for processing a video sequence, corresponding device, computer program and non-transitory computer-readable medium**

(57)     The invention relates to a method for converting the dynamic range of at least one image of a group of images (11), said group of images representing at least one part of a scene.

According to the invention, said method comprises the following steps, all implemented using a processor:
- generating (12) at least one piece of information representative of said scene using at least one element belonging to the group comprising:
o said group of images (11) and/or,
o a synthetic result delivered by a 3D modelling (120) of said scene,

- tone-mapping (13) said at least one image using said at least one piece of information representative of said scene.

Fig. 1

**Description**

**1. Technical Field**

The invention relates to the general field of dynamic range conversion implemented in image processing.

By definition the dynamic range is the ratio between the largest and smallest possible value of the changeable quantity corresponding to the luminance, which is a photometric measure of the luminous intensity per unit area of light travelling in a given direction (luminance being expressed in *cd/m²*).

More specifically, the invention can be applied for reducing the dynamic range of an image or of a sequence of images (said images being also called "frames"). In other words, the invention can be applied for changing the luminance values of the pixels of said image (or of the pixels of each image of the sequence of images), which belongs to a predetermined original dynamic range to obtain luminance values which belong to a dynamic range lower than the predetermined original dynamic range.

The invention finds particular application in image processing for photography or video application, and more particularly the restitution of High Dynamic Range images (HDR), which can represent more accurately the range of intensity levels found in real scenes.

**2. Background Art**

*2.1 Introduction*

The human sense of sight has a very high dynamic range. A human can indeed see objects in starlight (although colour differentiation is reduced at low light levels) or in bright sunlight, even though on a moonless night objects receive 1/1,000,000,000 of the illumination they would on a bright sunny day: that is a dynamic range of 30 f-stops.

In practice, it is difficult to achieve the full dynamic range experienced by humans using electronic equipment. Namely, the display capabilities of print-outs, LCD monitors, or projectors have a limited dynamic range (or low dynamic range LDR) that is inadequate to reproduce the full range of light intensities present in natural scenes.

High-dynamic-range (HDR) digital video solutions had been developed for representing more accurately the range of intensity levels found in real scenes. HDR images can capture more information than can be displayed on a conventional screen characterized by a low dynamic range (LDR), and are often captured by way of a plurality of differently exposed pictures of the same subject matter.

In other words, LDR cameras take photographs with a limited exposure range, resulting in the loss of detail in bright or dark areas. One of the HDR method to compensate for this loss of detail is the capture of multiple photographs at different exposure levels and their fusion to produce a photograph representative of a broader tonal range.

In addition, over the last decades, algorithms have been developed to map the image differently in shadow and in highlight in order to better distribute the lighting range across the image. These techniques are known as tone mapping and permit to convert High Dynamic Range images (HDR) or HDR video sequence, to low Dynamic Range (LDR) images or LDR video sequence.

*2.2 Tone Mapping Operators*

Such a tone mapping relies first on Tone Mapping Operators (TMOs) for modifying the dynamic of a source image captured using an HDR capture module to obtain a resulting image with a lower dynamic range so that such resulting image presents a dynamic adapted to be displayed on an LCD monitor.

In the following, "modifying the dynamic of an image" corresponds to convert, adapt or modify the luminance component (i.e. the luminance component values) of the image.

If the source image, once its dynamic range has been modified, is dedicated to a display system, the luminance component is quantized and encoded so that to be compatible with a display standard (e. g. BT 709, etc.). In this case, it is not referred to the "luminance" component but usually to the "luma" component.

Thus, the tone mapping techniques are just as much applicable to a luminance component than to a luma component.

Among the known tone mapping operators (TMOs), also called Tone reproducers, the PTR tone mapping operator, described in details by REINHARD E. et al. ("Photographic tone reproduction for digital images"), ACM transactions on Graphics, 21, 267-276 (July 2002) can be cited.

The principle of such an operator is to modify the luminance component $L_w$ of the video image to obtain a modified luminance component $L_d$ by using a mapping curve of sigmoid type given by the following equation:

$$L_d = \frac{L_s}{1+L_s} \cdot \left(1 + \frac{L_s}{L_{white}^2}\right) \qquad (1),$$

with $L_{white}$ a luminance value, for clipping areas of said video image $I_{M1}$ with high luminance values, $L_d$ a matrix whose size is the one of the video image and which comprises the luminance values of the pixels of said image which are expressed in a dynamic range of dynamic values lower than the original range of dynamic values of the video image, and $L_s$ a matrix whose size is the one of the video image, and which comprises the luminance values :

$$L_s = \frac{a}{k} \cdot L_W \qquad (2)$$

with $a$ a selected exposure value, k, usually called a key value, which defines an overall brightness indication of said video image:

$$k = exp\left(\frac{1}{B} \cdot \sum_{u=1}^{B} log(\delta + L_W(u))\right) \quad (3),$$

with B the number of pixels of said video image, $\delta$ a value for avoiding singularity and $L_W(u)$ the luminance value of a pixel $u$ of the luminance component of the video image.

The values $a$ and $L_{white}$ are two parameters of the TMO, with default value to 18% for the parameter $a$ and to the value of the maximum luminance of the original image for the parameter $L_{white}$. Equation (1) can be reformulated by ignoring the factor used for clipping the zones with high luminance values:

$$L_d = \frac{L_s}{1 + L_s} (1)$$

Applying a TMO "naively" to each frame of an HDR video sequence leads to temporal artefacts. For dealing with flickering artefacts, other tone mapping operators are based on the use of a key value depending on the pixels of the current image, whose dynamic range has to be converted, and on a predetermined number of pixels of the image preceding the current image in the sequence of images, as described by KANG S. B. et al. ("High dynamic range video"), ACM transactions on Graphics, Proceeding of ACM SIGGRAPH, volume 22, Issue 33, July 2003 pages 319-325.

There are also known tone mapping operators, which use a number of previous images of the video sequence, which is dynamically adapted according to the key value of the current image and the key values of previous images as described by RAMSEY S. et al. ("Adaptive temporal tone mapping"), Computer Graphics and Imaging - 2004 (3), 3-7 (2004).

Other tone mapping operators compare an original image with a visual response of the human visual system (HVS) to an image whose luminance values belong to a dynamic range adapted to a screen as described by MANTIUK R., ("Display adaptive tone mapping"), ACM Transactions on Graphics 27, 1 (Aug. 2008), which provides an image with the least distorted possible visual perception on the screen.

To deal with temporal artefacts, the above solutions use temporally close images of the video sequence to smooth out abrupt changes of luminance. However, longer time ranges introduce temporal brightness incoherency, the brightness being coherent in a tone mapped content when the relative brightness between two zones of the HDR video sequence is preserved during the tone mapping (both in the spatial and the temporal domain). But, as a TMO uses independently for each image (or frame) all the available display ranges, the HDR brightness coherency is not preserved throughout the tone mapping operation. Consequently, areas perceived as the brightest in the HDR sequence are not necessarily the brightest in the LDR one.

*2.3 Tone Mapping Post-Processing*

To preserve the brightness coherency between the tone mapped resulting images, a Brightness Coherency technique (called BC technique), has been proposed by one of the inventors BOITARD R. et al. ("Temporal coherency for video tone mapping"), in Proc. SPIE Conference Series, volume 8499 of SPIE Conference Series, 2012).

Such a technique relies on an indication of the overall brightness of each image (or frame) of a video sequence. By using the brightness image in the HDR video sequence (i.e. the frame with highest indication of overall brightness) as an anchor, each other tone mapped images are scaled down relative to this anchor.

As each image is processed relative to the anchor, the temporal brightness coherency is preserved even between non-adjacent images.

One drawback of this technique is that it deals only with the overall brightness without solving local brightness coherency. To solve this aspect, a Zonal Brightness Coherency (called ZBC technique) has been proposed by the inventor BOITARD R. et al. ("Zonal Brightness Coherency for video tone mapping"), Signal Processing: Image Communication Volume 9, Issue 2, February 2014, pages 229-246.

More precisely, according to this technique, each image is divided into segments using a histogram-based segmentation of HDR images. Then, video zones thanks to the resulting image's segments are defined, and the Brightness Coherency (BC) technique is applied to each video zone independently.

Such Zonal Brightness Coherency (ZBC) technique preserves both the temporal brightness coherency and the spatial contrast in each image.

*2.4 Drawbacks of the prior art technique*

The TMO's operators of the prior art is applied on each image of the video sequence independently, leading to temporal artefacts comprising temporal brightness incoherency, and the brightness coherency techniques require information coming from other video sequence images than from the current image.

In addition, in some cases relating to dynamic range conversion, all the other images of the video sequence are required to obtain an efficient result. In other words, once all the images belonging to the video sequence are captured, a post-processing can be implemented to find the more relevant luminance information for an optimal dynamic range conversion.

However, such requirements are not achievable when considering a real-time network broadcasting, where, at an instant t, information located in "future images" is not known.

Indeed, the use of a temporal buffer leads to a processing period, which is incompatible with real-time constraints. Thus, the methods of the prior art, using or not the brightness coherency techniques, do not permit to preserve the temporal coherency when a real-time broadcast is implemented.

The present disclosure overcomes at least one of the above-mentioned shortcomings.

## 3. <u>Summary Of Invention</u>

The present disclosure relates to a method for converting the dynamic range of at least one image of a group of images, said group of images representing at least one part of a scene,

According to at least one embodiment of the invention, the method comprises the following steps, all implemented using a processor:

- generating at least one piece of information representative of said scene using at least one element belonging to the group comprising:

    o said group of images and/or,
    o a synthetic result delivered by a 3D modelling of said scene

- tone-mapping said at least one image using said at least one piece of information representative of said scene.

The present disclosure thus proposes a new technique for converting the dynamic range of at least one image of a group of image, enabling an improved conversion of the dynamic range of the images of a group of images representing at least one part of a scene, which preserves temporal coherency.

To do so, at least one piece of information representative of said scene is generated according to the present disclosure.

By "scene", it is considered the two- or three-dimension place or environment, as a whole, from which a part is represented by the group of images. For example, if the group of images represents a soccer player on a football field, the scene corresponds to whole stadium where such images are captured.

Such piece of information representative of said scene, as a whole, is obtained from either the images of a group of images representing at least one part of the scene or a 3D modelling of the scene.

Using such a piece of information representative of said scene, the tone-mapping implemented according to the present disclosure preserves the temporal coherency since a piece of information representing the whole scene is taken into account.

Indeed, from said piece of information representative of said scene, a relevant luminance information is determined in real time and used for the computation of the tone mapping operator (TMO) which is modified regarding a classical TMO that could be implemented according to the prior art.

Such a piece of information permits for example:

- to determine causal pieces of information from a signal delivered by the capture module used for capturing said group of images,
- to determine the maximum brightness that can be found in the whole scene at an instant t such that all the other brightness have to be inferior to this maximum brightness after the conversion of dynamic range provided according to the present disclosure,
- or to determine all the features of the whole scene.

The present disclosure thus proposes an improved conversion of the dynamic range of the images of a group of images permitting a real-time network broadcasting of the tone-mapped images provided by the present method, since the temporal coherency between images is preserved.

Furthermore, the proposed conversion of the dynamic range does not require any extra capture module and can be implemented remotely from the capture module capturing said images of said group of images.

The conversion of the dynamic range technique according to the disclosure is thus easy to implement, well suited for a specific end-user, real-time, and less expensive than prior art techniques implemented for preserving the temporal coherency.

According to at least one embodiment, said at least one piece of information representative of said scene corresponds to an image representing the overall scene, said image being called overall image.

In other words, according to this embodiment, an extra image generated by the method according to the present disclosure is used, such extra image representing the whole scene. Thus, the conversion of a dynamic range of the video image is not implemented, as in the prior art, by taking into account only the known luminance information related to the video sequence, but by taking into account of an external information representing the whole scene.

According to a first variant of this embodiment, said overall image corresponds to a result of a sprite rendering process using some images of said group of images.

A sprite is obtained from a group of images by concatenating the images of the group of images so as to obtain a representation of the scene that is captured via the different captured images of the group of images, said concatenation being implemented using a deformation model taking into account the parameters of translation, zoom, rotation and perspective related to the captured images of the group of images.

Such technique has been developed and used in the context of the development of the standard Mpeg4 Visual Part 2, where one of the scenario consisted in using a sprite (corresponding to a built background of a scene) for a differential encoding the current image regarding a reference image extracted from a sprite.

In addition, updating the sprite over time has been studied as described in the patent application WO 2004 014081 but also by RICHARDSON Iain E.G. ("H.264 and MPEG-4 Video Compression"), J.W Wiley 2003*[3]* MPEG-4, Visual Coding (Part 2) (H.263) ISO/IEC 14496-2:2004. Information technology -- Coding of audio-visual objects -- Part 2: Visual (formal name). MPEG-4, Visual Coding*,* or by KRUTZ A. ("Rate-Distortion Optimized Video Coding Using Automatic Sprites") IEEE Selected Topics in Signal Processing, Volume 5, Issue 7, 25 august 2011.

It has to be noted that the present disclosure proposes a new application of a sprite rendering process for improving the conversion of the dynamic range, which was not proposed by the prior art.

According to a second variant of this embodiment, said overall image corresponds to a rendering of said 3D modelling.

Said rendering of a 3D modelling is exploited in the field of the rendering of physically realistic pictures, which is located on the border between the fields of computer graphics and physics.

The rendering of physically realistic pictures is a field that attempts to create images by simulating the reflectance behaviour of materials.

The rendering of physically realistic pictures is implemented for many applications such as the virtual restoration of a work of heritage, the simulation of optical effects, rendering for industrial design, or computer-aided design of color.

Such rendering is obtained by implementing two steps, one step of 3D modelling the scene.

A 3D modelling, in infographics, consists in creating, using a 3D modelling software, a three-dimensional object, by addition, subtraction and modifications of its components.

For example, 3D modelling software, which can be used according to the present invention are Blender®, or Maya®, 3Dreshaper®, etc.

The second step is the rendering which is a computer process calculating the 2D image (equivalent to a photograph) of a scene created by a 3D modelling software. Such a rendered 2D image comprises both objects and light sources, and is viewed from a specific viewpoint.

This process can use different techniques for calculating lighting, which are more or less elaborated. Among these techniques, the most known are the ray tracing rendering or the radiosity rendering.

For example, rendering software which can be used according to the present invention are Mitsuba®, Mental Ray®, LuxRender®, etc.

According to another embodiment, said at least one piece of information representative of said scene corresponds to a geometric mean luminance of a part of said scene.

Thus, according to this embodiment, the geometric mean luminance of a part of said scene is directly delivered using at least one element belonging to the group comprising:

   o said group of images and/or,
   o a synthetic result delivered by a 3D modelling of said scene,

according to anyone of the preceding variants as detailed above.

Such geometric mean luminance represents the most relevant luminance information that has to be taken into account for preserving the temporal coherency between all the images that can be captured over time for representing the scene.

Thus, according to this aspect, the classical tone-mapping operator (TMO) is modified by taking into account directly said geometric mean luminance.

Advantageously, said part of said scene corresponds to the brightest part of the scene. To determine such brightest part of the scene, the technique described by the inventor BOITARD R. et al. ("Zonal Brightness Coherency for video tone mapping"), Signal Processing: Image Communication Volume 9, Issue 2, February 2014, pages 229-246, can be implemented.

According to a specific feature of the disclosure, said tone mapping is implemented using a parametric curve defined by taking into account of said at least one piece of information representative of said scene.

According to this embodiment, said at least one piece of information representative of said scene can corresponds to an histogram of the scene associating each intensity value of the scene to the number of pixels in the image having that value, or a mean luminance, or the maximum luminance of the scene, etc.

Examples of parametric curves that are used by a tone mapping operation are disclosed in the prior art such as the technique of SCHLICK C. ("Quantization Techniques for Vizualization of High Dynamic Range pictures"), 5th Eurographics Workshop on Rendering, 1994, or the technique of REINHARD E. et al. ("Photographic Tone Reproduction for Digital Images") Proceedings of ACM SIGGRAPH 2002, or the technique of DRAGO F. et al. ("Adaptive Logarithmic Mapping For Displaying High Contrast Scenes") Computer Graphics Forum.

According to another embodiment, said tone-mapping comprises a post-processing substep taking into account said at least one piece of information representative of said scene.

Such a post-processing substep can consists in applying the technique described by GUTHIER G. et al. ("Flicker Reduction in Tone Mapped High dynamic Range Video") Proceedings of SPIE Color Imaging XVI: Displaying, Processing, Hardcopy, and Applications, vol. 7866, January 2011.

According to another variant of this embodiment, said post-processing can consists in applying a Zonal Brightness Coherency analysis as described by the inventor BOITARD R. et al. ("Zonal Brightness Coherency for video tone mapping"), Signal Processing: Image Communication Volume 9, Issue 2, February 2014, pages 229-246.

More precisely, according to this variant, said tone mapping of said at least one image delivers at least one tone mapped image, and comprises the following post-processing successive steps:

- a zonal brightness coherency analysis taking into account of said at least one piece of information representative of said scene, delivering anchor zones of an overall image representing the overall scene,
- a modification of said at least one tone mapped image using said anchor zones, delivering at least one modified tone mapped image,
- a tonal level redistribution of said at least one image using said modified tone mapped image, delivering at least one tone modified image,
- a conversion of floating point values of said at least one tone modified image to integer code values.

In other words, while in the prior art the Zonal Brightness Coherency (ZBC) analysis is applied only on video images, according to the present disclosure an extra information is taken into account when applying the ZBC analysis, such piece of information being representative of said scene, as a whole.

It has to be noted that according to this particular variant, the Zonal Brightness Coherency (ZBC) technique is applied after the classical tone mapping (i.e the TMO is not modified) and preserves in real time both the temporal brightness coherency and the spatial contrast in each image by taking into account said at least one piece of information representative of said scene.

According to this variant, when said piece of information representative of said scene corresponds directly to the overall image, the zonal brightness coherency is applied on said overall image.

Another aspect of the disclosure concerns a device for converting the dynamic range of at least one image of a group of images, said group of images representing at least one part of a scene, said device comprising a processor, and comprises also the following modules controlled by said processor:

- a generating module for generating at least one piece of information representative of said scene using at least one element belonging to the group comprising:

    o said group of images and/or,
    o a synthetic result delivered by a 3D modelling module of said scene

- a tone-mapping module for tone-mapping said at least one image using said at least one piece of information representative of said scene.

Such a device for converting the dynamic range of at least one image of a group of images can be especially adapted to implement the method for converting the dynamic range of at least one image of a group of images described here above. It could of course comprise the different characteristics pertaining to the method for converting the dynamic range of at least one image of a group of images according to an embodiment of the disclosure, which can be combined or taken separately. Thus, the characteristics and advantages of the device for converting the dynamic range of at least one image of a group of images are the same as those of the method for converting the dynamic range of at least one image of a group of images and are not described in more ample detail.

Another aspect of the disclosure pertains to a computer program product downloadable from a communication network and/or recorded on a medium readable by computer and/or executable by a processor, comprising program code instructions for implementing the steps of the method for converting the dynamic range of at least one image of a group of images described above.

In addition, the present disclosure concerns a non-transitory computer-readable medium comprising a computer program product recorded thereon and capable of being run by a processor, including program code instructions for implementing the steps of the method for converting the dynamic range of at least one image of a group of images previously described.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

4. **Brief description of the drawings**

The disclosure will be better understood and illustrated by means of the following embodiment and execution examples, in no way limitative, with reference to the appended figures on which:

- Figure 1 is a flow chart illustrating the main steps of a method for converting the dynamic range of at least one image of a group of images according to the disclosure;
- Figures 2A to 2C illustrate one variant of said the present invention, said variant implementing a generation of an overall image from the images of said group of images;
- Figures 3A and 3B illustrate one variant of the present invention, said variant implementing a rendering of a 3D modelling,
- Figure 4 is a block diagram of an example of a device implementing the method for converting the dynamic range of at least one image of a group of images according to the disclosure according to the example of Figure 1.

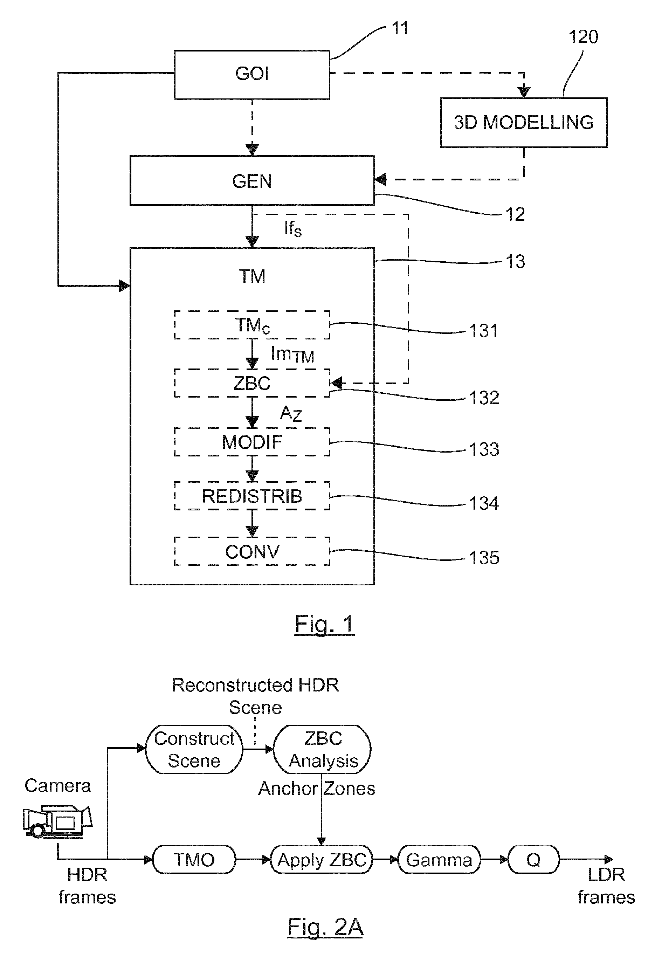

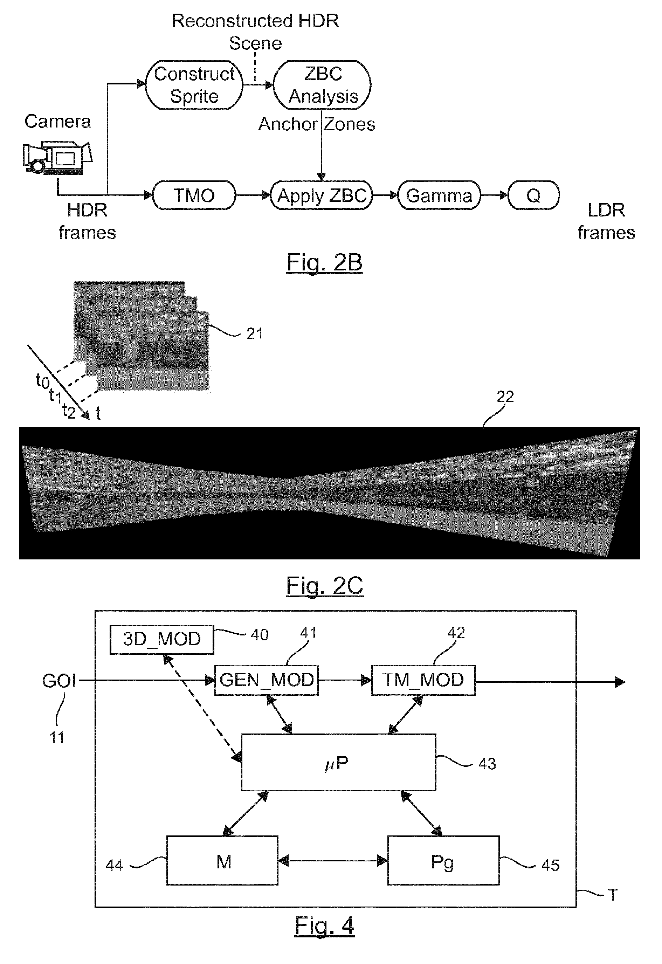

In Figures 1 and 4, the represented blocks are purely functional entities, which do not necessarily correspond to physically separate entities. Namely, they could be developed in the form of software, hardware, or be implemented in one or several integrated circuits, comprising one or more processors.

Wherever possible, the same reference numerals will be used throughout the figures to refer to the same or like parts.

5. <u>**Description of Embodiments**</u>

*5.1 **General** Principle*

The invention, according to its different embodiments, is based on luminance information, required for a real time dynamic range conversion of a group of images representing at least one part of a scene, and determined from a piece of information representing said scene as a whole, said piece of information being obtained from either the images of the group of images representing at least one part of the scene or a 3D modelling of the scene.

Thus, at an instant t the luminance information required for a good dynamic range conversion of a current image is determined using a generating step of said piece of information representing said scene as a whole.

Such piece of information representing said scene as a whole permits indeed to determine in real time the relevant luminance information, which would be determined according to the prior art only by post-processing the whole video sequence and once all the images (or frames) of the video sequence would be known.

Consequently, the present invention permits a real-time broadcasting and avoids the post processing according to the prior art.

In relation with figure 1, the main steps of the method for converting the dynamic range of at least one image of a group of images are detailed in the following.

First, a group of images GOI representing at least one part of a scene, is obtained (11) using for example by a capture module for example a high digital range camera delivering a HDR image. This image comprises physical luminance values (expressed in $cd/m^2$) recorded by said HDR camera at an instant t from a whole scene, which is currently filmed.

For example, such an image corresponds to zoom focused on a tennis player playing on a tennis court, whereas the whole scene corresponds to the whole tennis court.

Then, a piece of information $I_s$ representative of said scene is generated (12), using a processor, from either the images of the group of images GOI representing at least a part of the scene or from a tridimensional (3D) modelling (120).

Said 3D modelling can take into account or not of said images of said group of images (GOI).

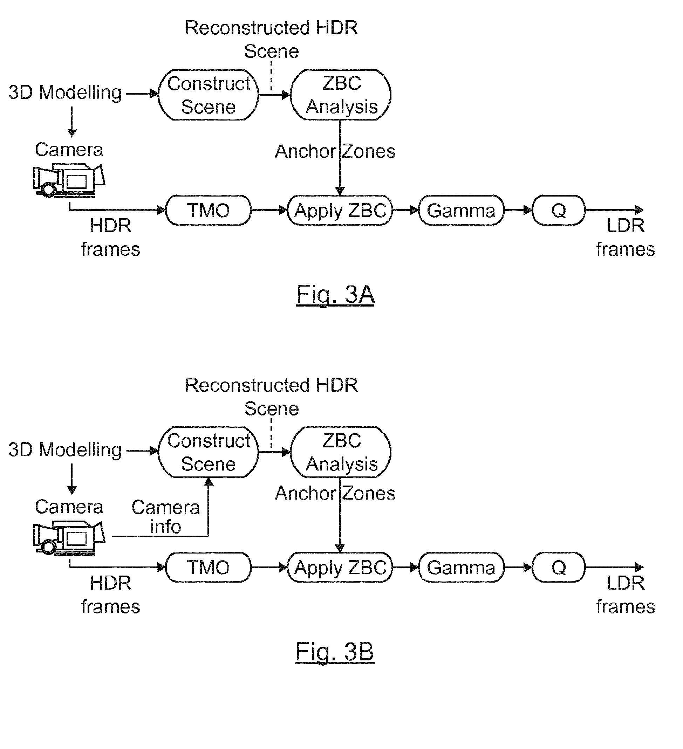

Examples of implementation of such step of generation of a piece of information representative of said scene are described in the following in details regarding figures 3A and 3B or regarding figures 4A and 4B.

Once, such a piece of information $If_s$ representative of said scene has been generated (12), at least one image or each images of said group of images are tone mapped using said at least one piece of information representative of said scene.

The figure 1 represents a particular embodiment of the present invention where the tone mapping step comprises five successive steps.

First, a classical tone mapping is applied on at least one image of said group of images delivers (131) at least one tone mapped image $Im_{TM}$ (i.e the classical TMO is applied and not modified). Then, a zonal brightness coherency analysis (132) is applied taking into account of said at least one piece of information representative of said scene, delivering anchor zones $A_z$ of an overall image representing the overall scene.

According to this variant, if said piece of information $If_s$ representative of said scene corresponds directly to an overall image of said scene as a whole, the zonal brightness coherency is applied on said overall image.

Or, if said piece of information representative of said scene corresponds a geometric mean luminance of a part of said scene, an overall image of said scene is generated (not represented) using a sprite rendering process or a 3D modelling as detailed regarding figures 3A and 3B or regarding figures 4A and 4B respectively.

A modification (133) of said at least one tone mapped image $Im_{TM}$ using said anchor zones $A_z$ delivering at least one modified tone mapped image is then applied (i.e the classical TMO is modified using said anchor zones $A_z$ delivered by the previous ZBC analysis).

Then, a tonal level redistribution (134) of said at least one image using said modified tone mapped image, delivering at least one tone modified image. Such a step is entitled "Gamma" on figures 2, 3A, 4A and 4B.

Finally, the tone mapping according to the particular aspect represented on figure 1 comprises a conversion (135) of floating point values of said at least one tone modified image to integer code values. Such a step is entitled "Q" on figures 2, 3A, 4A and 4B.

**5.2 Description of a first variant of a first embodiment**

In relation with figures 2A to 2C, a first variant of a first embodiment of the present disclosure is represented in the general figure 2A, and a particular implementation of such variant is illustrated by figures 2B to 2C.

According to said first embodiment, said at least one piece of information representative of said scene corresponds to an image representing the overall scene, said image being called overall image.

Thus, in this embodiment a supplemental image is created to represent the scene as a whole by using a processor.

In particular, according to the first variant represented in the general figure 2A the scene as a whole is constructed from images (or frames) representing at least one part of a scene.

Focusing again on the example about the tennis player, the camera delivers for example three successive frames over the time, said free successive frames capturing zones (overlapping or not) of a same scene corresponding to the tennis court where the player is playing.

According to the example represented on figure 2, said frames are High Dynamic Range images (HDR). As a consequence, according to the present disclosure, the overall scene generated from such HDR frames using a processor (automatically or by implementing a user interface) deliver an overall image, which can be called also a "reconstructed HDR scene".

Referring to figure 1 described previously, the ZBC analysis is applied to compute the anchor zones $A_z$ to apply (Apply ZBC) on the tone mapping (TMO).

According to a particular variant, it can be noted that over the time, the ZBC analysis can be applied each time a new image is captured in order to update the reconstructed scene (e.g. the reconstructed HDR scene in figure 2) and as a consequence the computation of the anchor zones $A_z$.

Such variant involves that there is as many steps of generating an overall image as steps of ZBC analysis.

According to another preferred variant, it is not necessary to iterate the ZBC analysis each time a new image is captured, but for the considered GOI representing a part of a scene, the ZBC analysis can be reiterate at an instant $t_c$, when the previous reconstructed scene becomes sufficiently different from the current scene that can be currently observed at such instant $t_c$.

In other words, if a difference D between the overall image $Im\_o_c$ generated (12) at said current instant $t_c$ is different from the previous overall image $Im\_o_p$ generated (12) at a previous instant $t_p$, is higher than a predetermined threshold, the ZBC analysis have to updated.

Such a difference D, is for example an histogram difference, or a mean luminance difference or a maximum luminance.

A particular implementation of the variant, represented in the general figure 2A described above, is illustrated by figures 2B to 2C.

In particular, as illustrated by figure 2B, constructing the overall image representing the scene as a whole is obtained by implementing a sprite rendering process.

Such a process is illustrated by figure 2C and computes a sprite (22) from a group of images (21) by concatenating the images of the group of images so as to obtain a representation of the scene that is captured via the different captured images of the group of images, said concatenation being implemented using a deformation model taking into account the parameters of translation, zoom, rotation and perspective related to the captured images of the group of images.

According to the example represented by figure 2C, the group of images obtained over the time t comprises successive images taken at different instant $t_0$, $t_1$, and $t_2$ and representing a tennis player evolving over time on a tennis court.

The sprite rendering process delivers a sprite (22) corresponding to the overall image representing the scene as a whole, i.e the tennis court with the tennis player (a motion estimation being implemented so that one object/character appears only one time in the delivered overall image), as required by the present invention to improve the dynamic range conversion of images.

Such a sprite permit thus to know the whole scene from which the images of the group of images are captured and thus permits to anticipate the relevant luminance that has to be used for preserving brightness coherency.

**5.3 Description of a second variant of said first embodiment**

In relation with figures 3A and 3B, a second variant of the first embodiment of the present disclosure, wherein said at least one piece of information representative of said scene corresponds to an overall image, is represented.

In particular, according to the second variant represented in these two figures 3A and 3B, the overall image is obtained using a 3D modelling.

According to the general figure 3A, the 3D modelling is implemented using a 3D modelling module (or tool) such as the module implementing the known Blender® 3D modelling software.

Such a 3D modelling software delivers a three-dimensional object, by addition, subtraction and modifications of its components.

Thus, considering the previous example about the scene corresponding to a tennis court wherein a tennis player is evolving over time, the Blender® software is able to deliver a 3D object representing the tennis court as a whole

Then, the scene corresponding to an overall synthetic image is delivered by a rendering process whose input is the 3D object delivered by the 3D modelling tool.

Such a rendering is a computer process calculating the 2D image (equivalent to a photograph) of the 3D object corresponding to the scene as previously created by the 3D modelling software. Such a rendered 2D image comprises both objects and light sources, and is viewed from a specific viewpoint.

This process can use different techniques for calculating lighting, which are more or less elaborated. Among these techniques, the most known are the ray tracing rendering or the radiosity rendering.

For example, rendering software which can be used according to the present invention are Mitsuba®, Mental Ray®, LuxRender®, etc.

A general case of such variant is represented in figure 3A and can correspond to a "walkthrough" scenario. In other words, such a scenario is for example involved when considering an interactive environment wherein the camera motion (i.e. the motion of the capture module) is managed by the user action and thus outside of the modelling/rendering software.

Such an interactive environment is for example the case of a video game where a character moves. In this particular case the whole scene has to be taken into account for improving the dynamic range conversion since the motions of the user are unpredictable.

In a particular case illustrated by the figure 3B, corresponding for example to the rendering of an animation film, the motion of the camera or a change of camera (if several cameras, viewpoints are required for synthesizing the film) are predefined by the artist (the film director if the considered group of images comprises the different frames of the film or the photograph if the considered group of images comprises pictures for illustrating a written report), who requires a specific rendering.

It can be seen, that in this particular case, some information of the 3-D scene will not be filmed by the camera and unnecessary to preserve the temporal coherency between the different images of the considered group of images.

Thus, in this particular case, a camera info can used to crop the overall image represented the scene from which some parts are captured in each image of the considered group of images.

## 5.4 Other embodiment

According to another embodiment (not represented), said at least one piece of information representative of said scene corresponds directly to a geometric mean luminance of a part of said scene instead of an overall image.

Thus, according to this embodiment, the geometric mean luminance of a part of said scene is directly delivered using at least one element belonging to the group comprising:

> o said group of images and/or,
> o a synthetic result delivered by a 3D modelling of said scene.

To extract directly such a geometric mean luminance a post-process is for example applied on the overall images that are obtained according to anyone of the preceding variants as detailed above.

Such a geometric mean luminance can then be applied to modify the classical TMO, which is implemented for converting the dynamic range of considered group of images.

Such geometric mean luminance represents the most relevant luminance information that has to be taken into account for preserving the temporal coherency between all the images that can be captured over time for representing the scene.

## 5.5 Global structure of a device for converting the dynamic range

Figure 4 illustrates an example of a device for converting the dynamic range of at least one image of a group of images, said group of images representing at least one part of a scene, according to an embodiment of the disclosure.

Such a device T comprises a processing unit 43 equipped for example with a microprocessor $\mu$P and driven by the computer program 45 implementing the method for converting the dynamic range of at least one image of a group of images according to the invention.

At initialization, the code instructions of the computer program 45 are for example loaded into a RAM and then executed by the processor of the processing unit 43.

According to the invention, the microprocessor of the processing unit 43 implements the steps of the method for converting the dynamic range of at least one image of a group of images described here above according to the instructions of the computer program 45. To this end, the device T comprises also the following modules controlled by said processor 43:

- a generating module 41 for generating at least one piece of information representative of said scene using at least one element belonging to the group comprising:

o said group of images and/or,
o a synthetic result delivered by a 3D modelling module 40 of said scene

- a tone-mapping module for tone-mapping 42 said at least one image using said at least one piece of information representative of said scene,
- storing means 44, such as a volatile memory M comprising a buffer memory RAM storing application and programs Pg 45 of the device T.

Theses modules are controlled by the microprocessor of the processing unit 43.

An internal bus (not represented) can be used to connect the various modules and all means well known to the skilled in the art for performing the generic functionalities of the device T.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

As will be appreciated by one skilled in the art, aspects of the present principles can be embodied as a system, method, computer program or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system." Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer disc, a hard disc, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing.

**Claims**

1. A method for converting the dynamic range of at least one image of a group of images (11), said group of images representing at least one part of a scene,
   wherein said method comprises the following steps, all implemented using a processor:

   - generating (12) at least one piece of information representative of said scene using at least one element belonging to the group comprising:

     o said group of images (11) and/or,
     o a synthetic result delivered by a 3D modelling (120) of said scene,

   - tone-mapping (13) said at least one image using said at least one piece of information representative of said scene.

**2.** The method according to claim 1, wherein said at least one piece of information representative of said scene corresponds to an image representing the overall scene, said image being called overall image.

**3.** The method according to claim 2, wherein said overall image corresponds to a result of a sprite (22) rendering process using some images of said group of images.

**4.** The method according to claim 2, wherein said overall image corresponds to a rendering of said 3D modelling (120).

**5.** The method according to claim 1, wherein said at least one piece of information representative of said scene corresponds to a geometric mean luminance of a part of said scene.

**6.** The method according to claim 5, wherein said part of said scene corresponds to the brightest part of the scene.

**7.** The method according to anyone of the preceding claims, wherein said tone mapping is implemented using a parametric curve defined by taking into account of said at least one piece of information representative of said scene.

**8.** The method according to anyone of the preceding claims, wherein said tone-mapping comprises a post-processing substep taking into account said at least one piece of information representative of said scene.

**9.** The method according to claim 8, wherein said tone mapping (13) of said at least one image delivers (131) at least one tone mapped image, and comprises the following post-processing successive steps:

- a zonal brightness coherency analysis (132) taking into account of said at least one piece of information representative of said scene, delivering anchor zones of an overall image representing the overall scene,
- a modification (133) of said at least one tone mapped image using said anchor zones, delivering at least one modified tone mapped image,
- a tonal level redistribution (134) of said at least one image using said modified tone mapped image, delivering at least one tone modified image,
- a conversion (135) of floating point values of said at least one tone modified image to integer code values.

**10.** A device for converting the dynamic range of at least one image of a group of images, said group of images (11) representing at least one part of a scene, said device comprising a processor,
wherein said device comprises also the following modules controlled by said processor:

- a generating module (41) for generating at least one piece of information representative of said scene using at least one element belonging to the group comprising:

o said group of images (11) and/or,
o a synthetic result delivered by a 3D modelling module (40) of said scene,

- a tone-mapping module (42) for tone-mapping said at least one image using said at least one piece of information representative of said scene.

**11.** A computer program product downloadable from a communication network and/or recorded on a medium readable by computer and/or executable by a processor, comprising program code instructions for implementing the steps of the method for converting the dynamic range of at least one image of a group of images according to one of claims 1 to 9.

**12.** A non-transitory computer-readable medium comprising a computer program product recorded thereon and capable of being run by a processor, including program code instructions for implementing the steps of the method for converting the dynamic range of at least one image of a group of images according to one of claims 1 to 9.

Fig. 1

Fig. 2A

Fig. 2B

Fig. 2C

Fig. 4

Reconstructed HDR
Scene

3D Modelling → Construct Scene ┄ ZBC Analysis

Camera

Anchor Zones

HDR frames → TMO → Apply ZBC → Gamma → Q → LDR frames

## Fig. 3A

Reconstructed HDR
Scene

3D Modelling → Construct Scene ┄ ZBC Analysis

Camera    Camera info

Anchor Zones

HDR frames → TMO → Apply ZBC → Gamma → Q → LDR frames

## Fig. 3B

Europäisches
Patentamt

European
Patent Office

Office européen
des brevets

# EUROPEAN SEARCH REPORT

**Application Number**

EP 14 30 6741

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/177150 A1 (UYTTENDAELE MATTHEW T [US] ET AL) 10 August 2006 (2006-08-10) * abstract; figure 5 * | 1-4, 10-12 | INV. G06T3/40 G06T5/00 G06T5/50 |
| X | Ronan Boitard: "Temporal Coherency in Video Tone Mapping - PhD thesis", , 16 October 2014 (2014-10-16), XP055161983, Université de Rennes 1 Retrieved from the Internet: URL:http://people.irisa.fr/Ronan.Boitard/articles/2014/Ronan_Boitard_PhD_Manuscript.pdf [retrieved on 2015-01-14] * Section 4.2; figure 3 * | 1,5-7, 10,12 | |
| X,D | BOITARD R. ET AL.: "Zonal Brightness Coherency for video tone mapping", SIGNAL PROCESSING: IMAGE COMMUNICATION, vol. 29, no. 2, February 2014 (2014-02), pages 229-246, XP002734607, * figures 11,12 * | 1,8-12 | |
| A | JOSSELIN PETIT ET AL: "A high dynamic range rendering pipeline for interactive applications; In search for perceptual realism", THE VISUAL COMPUTER ; INTERNATIONAL JOURNAL OF COMPUTER GRAPHICS, vol. 26, no. 6-8, 8 April 2010 (2010-04-08), pages 533-542, XP019845802, SPRINGER, BERLIN, DE ISSN: 1432-2315 * the whole document * | 1-12 | |

**TECHNICAL FIELDS SEARCHED (IPC)**

G06T

The present search report has been drawn up for all claims

| Place of search | Date of completion of the search | Examiner |
|---|---|---|
| Munich | 28 January 2015 | Tillier, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 30 6741

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2015

| Patent document cited in search report | Publication date | Patent family member(s) | Publication date |
|---|---|---|---|
| US 2006177150 A1 | 10-08-2006 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004014081 A

**Non-patent literature cited in the description**

- **REINHARD E. et al.** Photographic tone reproduction for digital images. *ACM transactions on Graphics,* July 2002, vol. 21, 267-276
- **KANG S. B. et al.** High dynamic range video. *ACM transactions on Graphics, Proceeding of ACM SIG-GRAPH,* 2003, vol. 22 (33), 319-325
- **RAMSEY S. et al.** Adaptive temporal tone mapping. *Computer Graphics and Imaging - 2004,* 2004, 3-7
- **MANTIUK R.** Display adaptive tone mapping. *ACM Transactions on Graphics,* August 2008, vol. 27, 1
- **BOITARD R. et al.** Temporal coherency for video tone mapping. *Proc. SPIE Conference Series, volume 8499 of SPIE Conference Series,* 2012
- **BOITARD R. et al.** Zonal Brightness Coherency for video tone mapping. *Signal Processing: Image Communication,* February 2014, vol. 9 (2), 229-246
- **RICHARDSON LAIN E.G.** H.264 and MPEG-4 Video Compression. J.W Wiley, 2003
- Information technology -- Coding of audio-visual objects -- Part 2: Visual (formal name). MPEG-4, Visual Coding. *MPEG-4, Visual Coding (Part 2) (H.263) ISO/IEC 14496-2,* 2004
- **KRUTZ A.** Rate-Distortion Optimized Video Coding Using Automatic Sprites. *IEEE Selected Topics in Signal Processing,* 25 August 2011, vol. 5 (7
- **SCHLICK C.** Quantization Techniques for Vizualization of High Dynamic Range pictures. *5th Eurographics Workshop on Rendering,* 1994
- **REINHARD E. et al.** Photographic Tone Reproduction for Digital Images. *Proceedings of ACM SIG-GRAPH,* 2002
- **DRAGO F. et al.** Adaptive Logarithmic Mapping For Displaying High Contrast Scenes. *Computer Graphics Forum*
- **GUTHIER G. et al.** Flicker Reduction in Tone Mapped High dynamic Range Video. *Proceedings of SPIE Color Imaging XVI: Displaying, Processing, Hardcopy, and Applications,* January 2011, vol. 7866